# FASCICULE DE BREVET EUROPEEN

(11) **EP 3 205 975 B1**
(45) Date de publication et mention de la délivrance du brevet: **15.08.2018**
(21) Numéro de dépôt: 17150601.7
(22) Date de dépôt: 09.01.2017
(51) Int. Cl.: G01B 5/255, G01B 11/275, G01B 21/26, G01M 17/007

(54) **SYSTEME ET PROCEDE DE MESURE DE L'ANGLE DE TORSION DE LA CAISSE D'UN VEHICULE**
SYSTEM UND VERFAHREN ZUM MESSEN DES TORSIONSWINKELS EINES FAHRZEUGAUFBAUS
SYSTEM AND METHOD FOR MEASURING THE TWIST ANGLE OF THE BODY OF A VEHICLE

(30) Priorité: 09.02.2016 FR 1650992
(43) Date de publication de la demande: 16.08.2017
(73) Titulaire: PSA Automobiles SA, 78300 Poissy (FR)
(72) Inventeur: DIGNAC, DOMINIQUE, 92100 BOULOGNE BILLANCOURT (FR); SAGNET, MICHEL, 60320 BETHISY ST PIERRE (FR); BOCHE, RENE, 92120 MONTROUGE (FR); KOROSZ, SEBASTIEN, 28410 BROUE (FR)

(56) Documents cités:
- CN-A- 104 848 830
- DE-A1- 10 154 337
- US-A- 4 330 945

## Description

L'invention concerne un système et un procédé de mesure de l'angle de torsion de la caisse d'un véhicule, notamment automobile.

La torsion statique de la caisse d'un véhicule, notamment automobile, est un paramètre prépondérant du confort vibratoire du véhicule, notamment dans le domaine des trépidations. Ainsi le comportement de la caisse du véhicule soumise à un couple de torsion permet l'analyse et l'étude de ce confort vibratoire. En particulier, la mesure de l'angle de torsion de la caisse d'un véhicule soumise à un couple de torsion est un paramètre important pris en considération dans le cadre de cette étude. US4330945 divulgue un dispositif pour l'alignement d'un châssis et de la carrosserie d'un véhicule. L'appareil comprend: plusieurs porte-échelle de mesure comprenant chacun une barre allongée rigide ayant des parties terminales opposées; une cible montée sur au moins une des parties terminales d'une des barres; et un instrument de visée monté sur au moins une des parties terminales d'une autre des barres, de telle sorte que l'instrument de visée puisse être monté à une certaine distance longitudinale de la cible. Le dispositif comprend des connecteurs pour monter chacune des dites barres transversalement à l'axe longitudinal du véhicule. L'alignement longitudinal des instruments de visée avec les cibles facilite la détermination et la correction de tout état endommagé ou désaligné dans le châssis et la carrosserie du véhicule.

CN 104848830 A divulgue un système de mesure de l'angle de torsion de la caisse d'un véhicule. Le système comporte une barre de torsion avec une forme en L installée sur une poutre longitudinale et une poutre transversale d'un châssis de véhicule. Une borne de mesure de déplacement est connectée au châssis du véhicule. Un dispositif de détection d'angle est utilisé pour détecter un angle de rotation relatif de la borne de mesure de déplacement.

DE10154337 A1 divulgue un procédé de détermination des modes de mouvement global élastique des véhicules à moteur lors de la conduite.

Il est connu du document DE 102010012178 un système et un procédé de mesure de la rigidité en torsion de la caisse d'un véhicule soumise à un couple de torsion par un système de déplacement. Ce système est constitué d'au moins un capteur, par exemple un capteur laser, positionnés à proximité des roues du véhicule et participant à la mesure de la rigidité en torsion, qui en outre dépend de l'angle de torsion, du moment de torsion, de l'amplitude de déplacement du système de déplacement, et des efforts fournis par la suspension.

Cependant, ce dispositif n'offre pas une mesure très reproductible car il est difficile de positionner les capteurs exactement au même endroit d'un véhicule à l'autre. D'autre part, la méthode de calcul de la rigidité en torsion fait intervenir de nombreux paramètres. C'est donc une méthode de calcul compliquée et à la précision limitée.

La présente invention a pour but de pallier les inconvénients ci-dessus de l'art antérieur. Elle est définie dans les revendications indépendantes 1 et 8.

Pour atteindre ce but, l'invention concerne un système de mesure de l'angle de torsion de la caisse d'un véhicule, notamment automobile, comprenant au moins deux barres rectilignes rigides amoviblement solidaires du bas de caisse du véhicule, transversalement à la direction longitudinale du véhicule et écartées l'une de l'autre, et un dispositif de mesure solidaire de l'extrémité d'au moins l'une des deux barres transversales et apte à mesurer l'angle de torsion de la caisse à partir du décalage vertical relatif entre les deux extrémités situées d'un même côté des deux barres transversales.

Selon une autre particularité, les deux barres transversales sont solidarisées aux longerons respectivement avant et arrière de la caisse du véhicule.

Le système de mesure selon l'invention comprend une barre longitudinale disposée parallèlement à l'axe longitudinal du véhicule et reliée par une extrémité rigidement à l'une des deux barres transversales et par l'autre extrémité de manière pivotante à l'autre barre transversale par rapport à l'axe de la barre longitudinale.

Selon une autre particularité, la barre longitudinale est télescopique de manière à régler la distance d'écartement entre les deux barres transversales reliées aux extrémités de la barre longitudinale.

Selon une autre particularité, le système de mesure comprend une barre transversale intermédiaire positionnée à proximité de la barre transversale montée pivotante sur la barre longitudinale, une extrémité de la barre transversale intermédiaire étant solidaire de la barre longitudinale de sorte que le décalage vertical relatif mesuré entre la barre transversale montée pivotante et la barre transversale intermédiaire soit le même que le décalage vertical relatif entre les deux barres transversales solidaires du bas de caisse du véhicule.

Selon une autre particularité, le dispositif de mesure comprend un dispositif de palpage à contact solidaire de l'extrémité de la barre transversale montée pivotante et dont le palpeur est en contact avec la barre transversale intermédiaire au niveau de l'extrémité de cette dernière.

Selon une autre particularité, le dispositif de mesure comprend au moins une source laser solidaire de l'extrémité de l'une des deux barres transversales et une cellule de réception solidaire de l'extrémité de l'autre barre transversale et apte à recevoir un faisceau laser émis par la source laser et une unité de traitement du signal de sortie de la cellule.

Selon une autre particularité, le système de mesure comprend deux dispositifs de mesure comportant respectivement deux sources lasers solidaires des extrémités des deux barres transversales et deux cellules de réception solidaires des extrémités des deux barres transversales et aptes à recevoir respectivement les deux faisceaux laser émis par les deux sources laser et une unité de traitement des signaux de sortie des cellules de réception.

L'invention concerne également un procédé de mesure de l'angle de torsion de la caisse d'un véhicule, notamment automobile, à l'aide d'un système de mesure tel que décrit ci-dessus, caractérisé en ce qu'il comprend :
- Une étape de mise en torsion de la caisse du véhicule,
- Une étape de mesure du décalage vertical relatif entre les deux extrémités des deux barres transversales,
- Une étape de calcul de l'angle de torsion de la caisse du véhicule selon la formule *α* = arctan(*L*/*H*), H étant la valeur mesurée du décalage vertical et L étant la valeur de la distance transversale séparant chaque dispositif de mesure de l'axe longitudinal du véhicule,
- Une étape de normalisation de l'angle de torsion, en divisant la valeur de l'angle par la distance longitudinale séparant les deux barres transversales solidaires du bas de caisse du véhicule.

Selon une autre particularité, l'étape de mise en torsion de la caisse du véhicule est accomplie via des plateformes montées sur vérins sur lesquelles reposent les roues du véhicule, et imposant des débattements verticaux diagonalement opposés aux roues du véhicule.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant deux modes de réalisation de l'invention et dans lesquels :
- La figure 1 représente une vue en perspective et en transparence d'un véhicule sous lequel est monté un système de mesure de l'angle de torsion dans un premier mode de réalisation selon l'invention ;
- La figure 2 représente une vue en perspective du système de mesure de l'angle de torsion de la figure 1 lorsque l'angle de torsion mesuré est nul ;
- La figure 3 représente une vue en perspective du système de la figure 2 lorsque l'angle de torsion mesuré est non nul ;
- La figure 4 représente une vue de côté du système de la figure 3 lorsque l'angle de torsion mesuré est non nul ;
- La figure 5 représente une vue en perspective du système de mesure de l'angle de torsion dans un second mode de réalisation lorsque l'angle de torsion mesuré est nul ;
- La figure 6 représente une vue en perspective du système de la figure 5 lorsque l'angle de torsion mesuré est non nul ;

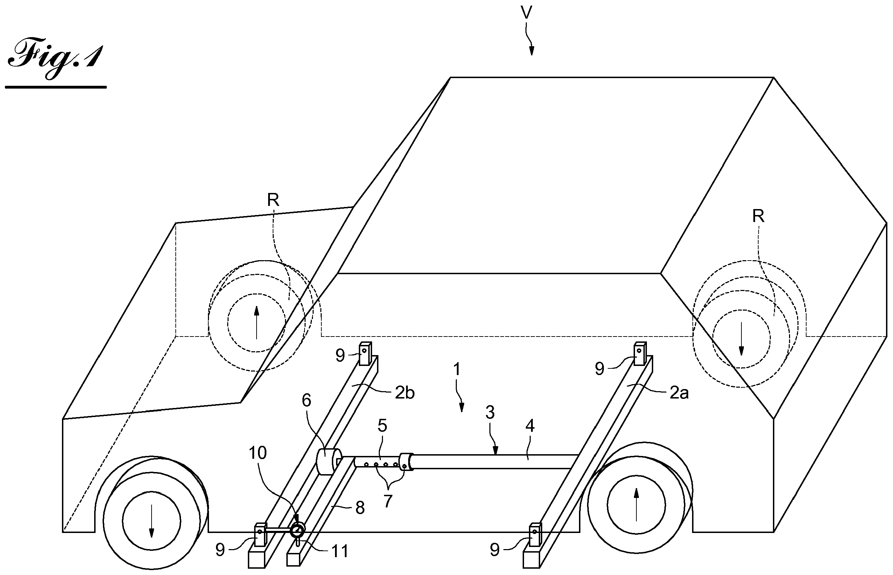

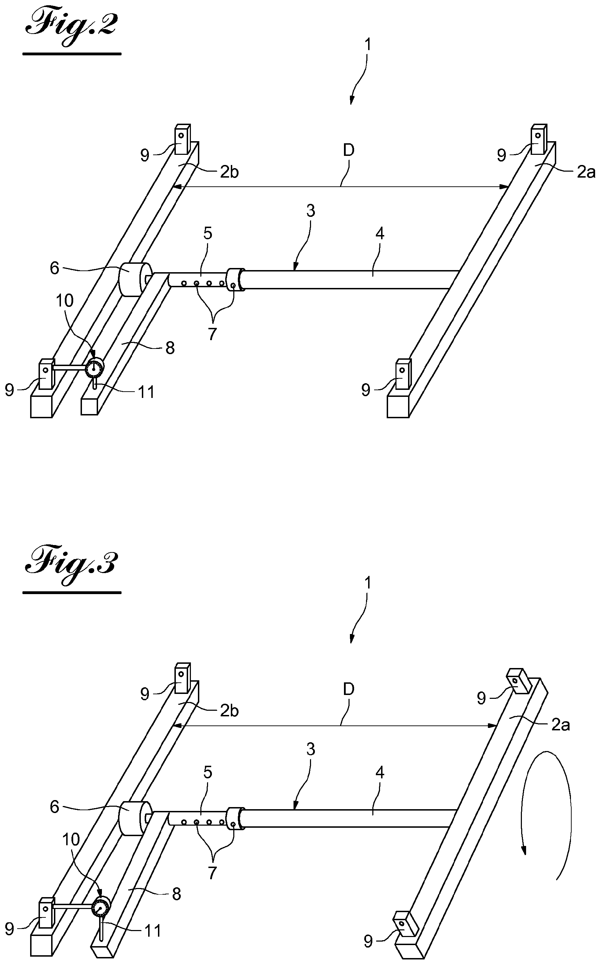

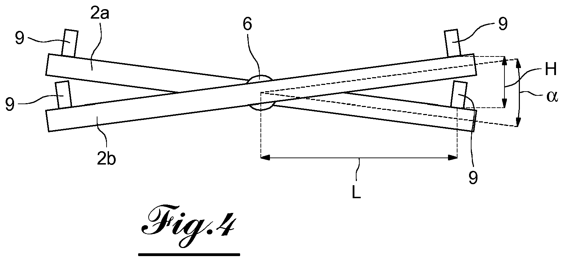

En référence aux figures 1 à 4, un premier mode de réalisation du système 1 de l'invention permettant une mesure de l'angle de torsion a de la caisse d'un véhicule, notamment automobile, va être décrit.

Le système de mesure 1 de l'angle de torsion *α* de la caisse comprend deux barres rectilignes rigides 2a, 2b, fixées au bas de caisse du véhicule V transversalement à sa direction longitudinale. Les deux barres transversales 2a, 2b sont écartées l'une de l'autre et amoviblement solidarisées par des moyens de fixation appropriés respectivement aux longerons avant et arrière de la caisse du véhicule V. En outre, les barres transversales 2a, 2b sont préférentiellement positionnées sous les sièges respectivement avant et arrière du véhicule V.

De manière préférentielle, les barres transversales 2a, 2b sont des profilés métalliques de section transversale carrée ou rectangulaire. Les moyens de fixation des barres transversales 2a, 2b au bas de caisse comprennent des pattes métalliques 9 faisant saillie au voisinage des extrémités des barres transversales 2a, 2b perpendiculairement à ces dernières en direction du bas de caisse du véhicule V, et des vis de fixation solidarisant les pattes au bas de caisse.

Ainsi, les déformations subies par la caisse du véhicule V induisent le déplacement relatif d'une barre transversale 2a, 2b par rapport à l'autre, ce déplacement pouvant être quantifié grâce à un dispositif de mesure 10, 11 qui sera décrit plus loin. En particulier, les déformations de la caisse du véhicule V dues à un couple de torsion induisent un décalage vertical relatif H entre les deux extrémités situées d'un même côté du véhicule V des deux barres transversales 2a, 2b.

La mise en torsion de la caisse du véhicule V peut être réalisée de manière reproductible, et constitue la première étape d'un procédé de mesure de l'angle de torsion *α* de la caisse d'un véhicule V qui sera décrit plus loin.

Le système de mesure 1 de l'angle de torsion *α* de la caisse comprend également une barre longitudinale 3 disposée parallèlement à l'axe longitudinal du véhicule V, préférentiellement selon cet axe longitudinal. La barre longitudinale 3 est reliée par une extrémité rigidement à l'une des deux barres transversales 2a, par exemple par soudage. La barre longitudinale 3 est également reliée par son autre extrémité de manière pivotante à l'autre barre transversale 2a par rapport à l'axe de la barre longitudinale 3, via un mécanisme à roulement 6 solidaire de la barre transversale.

De préférence la barre longitudinale 3 est télescopique pour permettre le réglage de l'écartement D entre les deux barres transversales 2a, 2b avant leur fixation au bas de caisse du véhicule. A cet effet, la barre longitudinale 3 comprend une partie tubulaire 4 dont une extrémité est fixée rigidement à l'une des barres transversales 2b, et une partie cylindrique 5 apte à coulisser à l'intérieur de la partie tubulaire 4, et dont une extrémité est reliée au mécanisme à roulement 6 compris dans l'autre barre transversale 2a. En outre, les parties respectivement tubulaire 5 et cylindrique 4 comprennent chacune une pluralité de perçages 7 pour permettre le blocage relatif des deux parties 4, 5 l'une par rapport à l'autre par l'insertion d'une goupille dans deux perçages 7 en vis-à-vis respectivement de la partie cylindrique 5 et de la partie tubulaire 4.

Pour permettre la mesure du décalage vertical relatif H entre les deux barres transversales 2a, 2b, le système de mesure 1 de l'angle de torsion *α* de la caisse comprend une barre transversale intermédiaire 8 positionnée à proximité de la barre transversale 2b montée pivotante sur la barre longitudinale 3. Une extrémité de la barre transversale intermédiaire 8 est fixée rigidement sur la barre longitudinale 3, notamment sur la partie cylindrique 5 de cette dernière lorsque la barre longitudinale 3 est télescopique, de sorte que le décalage vertical relatif H mesuré entre la barre transversale montée pivotante 2b et la barre transversale intermédiaire 8 soit le même que le décalage vertical relatif H existant entre les deux barres transversales 2a, 2b solidaires du bas de caisse du véhicule V.

Pour mesurer ce décalage vertical relatif H, le système de mesure 1 selon l'invention comprend un dispositif de palpage à contact 10 solidaire de l'extrémité de la barre transversale montée pivotante 2b sur la barre longitudinale 3. Le dispositif de palpage 10 comprend un palpeur 11 qui est en contact avec la barre transversale intermédiaire 8 au niveau de l'extrémité de cette dernière.

A partir de la mesure de ce décalage vertical relatif H, dont la valeur est directement lue sur le dispositif de palpage 10, il est aisé de calculer l'angle de torsion *α* selon la formule *α* = arctan(*L*/*H*), où L est la distance transversale séparant le dispositif de palpage 10 de l'axe longitudinal du véhicule, et où H est le décalage vertical relatif mesuré par le dispositif de palpage 10 entre la barre transversale montée pivotante 2b et la barre transversale intermédiaire 8. Le système de mesure 1 de l'angle de torsion *α* de la caisse du véhicule V, dans ce premier mode de réalisation, offre une précision de mesure de l'ordre de +/- 0,03 milliradians.

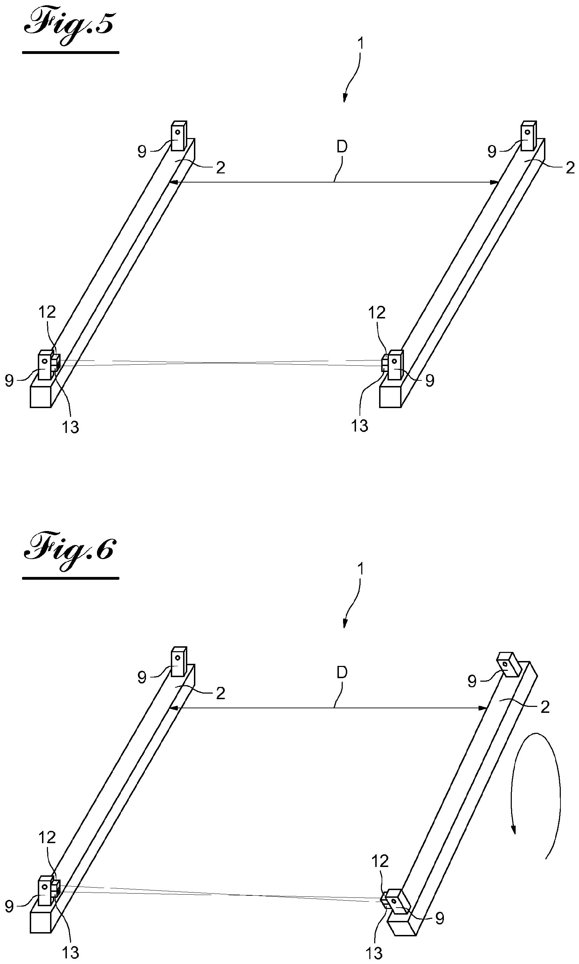

En référence aux figures 5 et 6, un second mode de réalisation du système 1 de l'invention permettant de mesurer l'angle de torsion *α* de la caisse d'un véhicule V, notamment automobile, va être décrit.

A l'instar du premier mode de réalisation, le système de mesure 1 de l'angle de torsion *α* de la caisse du véhicule V comprend deux barres transversales 2 par rapport à la direction longitudinale du véhicule V, amoviblement fixées respectivement aux longerons avant et arrière de la caisse du véhicule V. Ces barres transversales 2 sont les mêmes que celles 2a, 2b du premier mode de réalisation de l'invention, et on se rapportera au texte ci-dessus pour une description des caractéristiques de ces barres transversales 2.

La différence entre le premier mode de réalisation et le second mode de réalisation est que ce dernier ne comporte pas de barre transversale intermédiaire 8. En outre, le système de mesure du second mode de réalisation comporte une barre longitudinale 3 de liaison des deux barres transversales 2.

Pour permettre la mesure du décalage vertical relatif H entre les deux barres transversales 2, le système de mesure 1 de l'angle de torsion *α* de la caisse comprend deux dispositifs de mesure 12, 13 solidaires des extrémités situées d'un même côté du véhicule des deux barres transversales 2. Chaque dispositif de mesure comprend une source d'émission 12 d'un faisceau laser et une cellule de réception 13 du faisceau laser émis par la source laser 12. Ainsi, l'une des deux sources laser 12 est solidaire d'une extrémité d'une première des deux barres transversales 2 et la cellule de réception 13 associée à cette source 12 est solidaire de l'extrémité de la seconde barre transversale 2, tandis que l'autre source laser 12 est solidaire de l'extrémité de la seconde barre transversale 2 et la cellule de réception 13 associée à cette autre source laser 12 est solidaire de l'extrémité de la première barre transversale 2.

Les signaux électriques de sortie respectivement des deux cellules de réception 13 sont envoyés vers une unité de traitement de ces signaux de sortie, afin de mesurer le décalage vertical relatif H entre les deux barres transversales 2. Cette unité de traitement permet également de calculer l'angle de torsion *α* de la caisse du véhicule V à partir de ce décalage vertical relatif H mesuré, selon la formule décrite précédemment avec le premier mode de réalisation. Le système de mesure 1 de l'angle de torsion *α* de la caisse d'un véhicule V, dans ce second mode de réalisation, offre également une précision de mesure de l'ordre de +/- 0,03 milliradians.

Le procédé de mesure de l'angle de torsion *α* de la caisse d'un véhicule V, notamment automobile, à l'aide d'un système de mesure 1 tel que décrit précédemment dans les deux modes de réalisation, va maintenant être décrit.

La première étape de ce procédé consiste à appliquer un couple de torsion à la caisse du véhicule V. Pour ce faire, les roues R du véhicule reposent respectivement sur des plateformes montées sur vérins. Pour générer la torsion, ces plateformes imposent des débattements verticaux diagonalement opposés aux roues R du véhicule V. A titre d'exemple en référence à la figure 1, les roues avant droite et arrière gauche subissent un débattement de 50 mm vers le haut par rapport à la caisse du véhicule V, tandis que les roues avant gauche et arrière droite subissent un débattement de 50 mm vers le bas par rapport à la caisse du véhicule V. Ces débattements sont représentés sur la figure 1 par des flèches verticales pointant dans la direction du débattement de la roue correspondante. Les efforts produits par la déformation des suspensions induisent la torsion de la caisse du véhicule V.

La deuxième étape du procédé consiste en la mesure du décalage vertical relatif H entre les deux barres transversales 2, 2a, 2b du système de mesure de l'angle de torsion *α*, induit par la torsion de la caisse du véhicule V provoquée à l'étape précédente.

La troisième étape consiste à calculer, via une unité de traitement du système de mesure ou manuellement, l'angle de torsion *α* selon la formule décrite ci-dessus.

Enfin, la quatrième étape est une normalisation de l'angle de torsion *α*, réalisée manuellement ou via l'unité de traitement. En effet, la distance D entre les deux barres transversales 2, 2a, 2b étant réglable, il est nécessaire de normaliser le résultat en divisant la valeur de l'angle obtenu *α* par la distance D entre les deux barres transversales. Le résultat final s'exprime ainsi en milliradians par mètre (mrad/m).

Le système de mesure 1 de l'angle de torsion *α* de la caisse d'un véhicule V permet donc la réalisation de cette mesure de manière simple, et surtout de manière très reproductible compte tenu de la précision de la mesure. En effet, l'angle de torsion *α* d'une caisse de véhicule étant de l'ordre du milliradian, une telle précision de mesure de l'ordre de +/- 0.03 milliradians est idéal pour assurer des mesures reproductibles. Cette grande précision est permise par le faible nombre de paramètres impliqués dans la mesure, à savoir uniquement le décalage vertical relatif H entre les deux barres transversales et la distance transversale L entre le dispositif de mesure 10, 11, 12, 13 et l'axe longitudinal du véhicule V. Ces deux paramètres étant eux-mêmes mesurés de manière très précise, il en est de même pour l'angle de torsion *α* de la caisse. Enfin, ce système de mesure 1 peut être utilisé sur un grand nombre de types de véhicules, et ne nécessite aucun pièce d'adaptation d'un type de véhicule à un autre.

La configuration telle que décrite n'est pas limitée aux modes de réalisation décrits précédemment et représentés sur les figures. Elle n'a été donnée qu'à titre d'exemple non limitatif. De multiples modifications peuvent être apportées sans pour autant sortir du cadre de l'invention telle que définie par les revendications. En particulier, on pourrait imaginer, dans le cadre du second mode de réalisation du système 1 de l'invention, une seule source d'émission 12 d'un faisceau laser montée à une extrémité de l'une des deux barres transversales 2 et une cellule de réception 13 de ce faisceau laser montée du même côté du véhicule à l'extrémité de l'autre barre transversale 2 .

## Revendications

1. Système de mesure (1) de l'angle de torsion (*α*) de la caisse d'un véhicule (V), notamment automobile, comprenant au moins deux barres rectilignes rigides (2, 2a, 2b) amoviblement solidaires du bas de caisse du véhicule (V), transversalement à la direction longitudinale du véhicule et écartées l'une de l'autre, et un dispositif de mesure (10, 11, 12, 13) solidaire de l'extrémité d'au moins l'une des deux barres transversales (2, 2a, 2b) et apte à mesurer l'angle de torsion (*α*) de la caisse à partir du décalage vertical relatif (H) entre les deux extrémités situées d'un même côté des deux barres transversales (2, 2a, 2b), **caractérisé en ce qu'**il comprend une barre longitudinale (3) disposée parallèlement à l'axe longitudinal du véhicule et reliée par une extrémité rigidement à l'une des deux barres transversales (2a) et par l'autre extrémité de manière pivotante à l'autre barre transversale (2b) par rapport à l'axe de la barre longitudinale (3).

2. Système de mesure (1) selon la revendication 1, **caractérisé en ce que** les deux barres transversales (2, 2a, 2b) sont aptes à être solidarisées aux longerons respectivement avant et arrière de la caisse du véhicule (V).

3. Système de mesure (1) selon la revendication 1 ou 2, **caractérisé en ce que** la barre longitudinale (3) est télescopique de manière à régler la distance d'écartement entre les deux barres transversales (2a, 2b) reliées aux extrémités de la barre longitudinale (3).

4. Système de mesure (1) selon la revendication 1, 2 ou 3, **caractérisé en ce qu'**il comprend une barre transversale intermédiaire (8) positionnée à proximité de la barre transversale montée pivotante (2b) sur la barre longitudinale (3), une extrémité de la barre transversale intermédiaire (8) étant solidaire de la barre longitudinale (3) de sorte que le décalage vertical relatif (H) mesuré entre la barre transversale montée pivotante (2b) et la barre transversale intermédiaire (8) soit le même que le décalage vertical relatif (H) entre les deux barres transversales (2a, 2b) solidaires du bas de caisse du véhicule (V).

5. Système de mesure (1) selon la revendication 4, **caractérisé en ce que** le dispositif de mesure comprend un dispositif de palpage à contact (10) solidaire de l'extrémité de la barre transversale montée pivotante (2b) et dont le palpeur (11) est en contact avec la barre transversale intermédiaire (8) au niveau de l'extrémité de cette dernière.

6. Système de mesure (1) selon l'une quelconque des revendications 1 à 3, **caractérisé en ce que** le dispositif de mesure comprend au moins une source laser (12) solidaire de l'extrémité de l'une des deux barres transversales (2) et une cellule de réception (13) solidaire de l'extrémité de l'autre barre transversale (2) et apte à recevoir un faisceau laser émis par la source laser (12) et une unité de traitement du signal de sortie de la cellule (13).

7. Système de mesure (1) selon l'une des revendications 1 à 3, **caractérisé en ce qu'**il comprend deux dispositifs de mesure comportant respectivement deux sources lasers (12) solidaires des extrémités des deux barres transversales (2) et deux cellules de réception (13) solidaires des extrémités des deux barres transversales (2) et aptes à recevoir respectivement les deux faisceaux laser émis par les deux sources laser (12) et une unité de traitement des signaux de sortie des cellules de réception (13).

8. Procédé de mesure de l'angle de torsion (*α*) de la caisse d'un véhicule (V), notamment automobile, à l'aide d'un système de mesure (1) selon l'une quelconque des revendications 1 à 7, **caractérisé en ce qu'**il comprend :
• Une étape de mise en torsion de la caisse du véhicule (V),
• Une étape de mesure du décalage vertical relatif (H) entre les deux extrémités des deux barres transversales (2, 2a, 2b),
• Une étape de calcul de l'angle de torsion (*α*) de la caisse du véhicule (V) selon la formule *α* = arctan(*L*/*H*), H étant la valeur mesurée du décalage vertical et L étant la valeur de la distance transversale séparant chaque dispositif de mesure de l'axe longitudinal du véhicule,
• Une étape de normalisation de l'angle de torsion (*α*), en divisant la valeur de l'angle (*α*) par la distance longitudinale (D) séparant les deux barres transversales (2, 2a, 2b) solidaires du bas de caisse du véhicule (V).

9. Procédé de mesure selon la revendication 8, **caractérisé en ce que** l'étape de mise en torsion de la caisse du véhicule (V) est accomplie via des plateformes montées sur vérins sur lesquelles reposent les roues (R) du véhicule (V), et imposant des débattements verticaux diagonalement opposés aux roues (R) du véhicule (V).

## Patentansprüche

1. System zum Messen (1) des Torsionswinkels (α) des Aufbaus eines Fahrzeugs (V), insbesondere eines Kraftfahrzeugs, das mindestens zwei geradlinige starre Stangen (2, 2a, 2b) umfasst, die abnehmbar fest mit dem Karosserieboden des Fahrzeugs (V) quer zu der Längsrichtung des Fahrzeugs verbunden und voneinander beabstandet sind, und eine Messvorrichtung (10, 11, 12, 13), die mit dem Ende mindestens der einen der zwei Querstangen (2, 2a, 2b) fest verbunden und geeignet ist, um den Torsionswinkel (α) des Aufbaus ausgehend von der relativen vertikalen Verlagerung (H) zwischen den beiden Enden zu messen, die auf einer selben Seite der zwei Querstangen (2, 2a, 2b) liegen, **dadurch gekennzeichnet, dass** es eine Längsstange (3) umfasst, die parallel zu der Längsachse des Fahrzeugs angeordnet und an einem Ende starr mit einer der zwei Querstangen (2a) und an dem anderen Ende schwenkend an der anderen Querstange (2b) in Bezug auf die Längsstange (3) verbunden ist.

2. Messsystem (1) nach Anspruch 1, **dadurch gekennzeichnet, dass** die zwei Querstangen (2, 2a, 2b) angepasst sind, um fest jeweils mit dem vorderen und hinteren Längsträger des Aufbaus des Fahrzeugs (V) verbunden zu sein.

3. Messsystem (1) nach Anspruch 1 oder 2, **dadurch gekennzeichnet, dass** die Längsstange (3) teleskopisch derart ist, dass die Beabstandungsentfernung zwischen den zwei Querstangen (2a, 2b), die mit den Enden der Längsstange (3) verbunden sind, eingestellt wird.

4. Messsystem (1) nach Anspruch 1, 2 oder 3, **dadurch gekennzeichnet, dass** es eine Zwischenquerstange (8) umfasst, die in der Nähe der Querstange (2b), die schwenkend auf der Längsstange (3) montiert ist, positioniert ist, wobei ein Ende der Zwischenquerstange (8) fest mit der Längsstange (3) derart verbunden ist, dass die relative vertikale Verschiebung (H), die zwischen der schwenkend montierten Querstange (2b) und der Zwischenquerstange (8) gemessen wird, gleich ist wie die relative vertikale Verschiebung (H) zwischen den zwei Querstangen (2a, 2b), die fest mit dem Karosserieboden des Fahrzeugs (V) verbunden sind.

5. Messsystem (1) nach Anspruch 4, **dadurch gekennzeichnet, dass** die Messvorrichtung eine Abtastvorrichtung mit Kontakt (10) umfasst, die fest mit dem Ende der schwenkend montierten Querstange (2b) verbunden ist, und deren Fühler (11) mit der Zwischenquerstange (8) im Bereich ihres Endes in Berührung ist.

6. Messsystem (1) nach einem der Ansprüche 1 bis 3, **dadurch gekennzeichnet, dass** die Messvorrichtung mindestens eine Laserquelle (12) umfasst, die fest mit dem Ende der einen der zwei Querstangen (2) verbunden ist, und eine Empfangszelle (13), die fest mit dem Ende der anderen Querstange (2) verbunden und geeignet ist, um einen Laserstrahl zu empfangen, der von der Laserquelle (12) abgegeben wird, und eine Verarbeitungseinheit des Ausgangssignals der Zelle (13) .

7. Messsystem (1) nach einem der Ansprüche 1 bis 3, **dadurch gekennzeichnet, dass** es zwei Messvorrichtungen umfasst, die jeweils zwei Laserquellen (12) umfassen, die fest mit den Enden der zwei Querstangen (2) verbunden sind, und zwei Empfangszellen (13), die fest mit den Enden der zwei Querstangen (2) verbunden sind und geeignet sind, um jeweils die zwei Laserstrahlen zu empfangen, die von den zwei Laserquellen (12) abgegeben werden, und eine Verarbeitungseinheit der Ausgangssignale der Empfangszellen (13).

8. Verfahren zum Messen des Torsionswinkels (α) des Aufbaus eines Fahrzeugs (V), insbesondere eines Kraftfahrzeugs, mit Hilfe eines Messsystems (1) nach einem der Ansprüche 1 bis 7, **dadurch gekennzeichnet, dass** es Folgendes umfasst:
• einen Schritt des Eintretens in Torsion des Aufbaus des Fahrzeugs (V),
• einen Schritt des Messens der relativen vertikalen Verlagerung (H) zwischen den zwei Enden der zwei Querstangen (2, 2a, 2b),
• einen Schritt des Berechnens des Torsionswinkels (α) des Aufbaus des Fahrzeugs (V) gemäß der Formel α = arctan (L/H), wobei H der Messwert der vertikalen Verlagerung ist, und L der Wert des Querabstands ist, der jede Messvorrichtung von der Längsachse des Fahrzeugs trennt,
• einen Schritt des Normalisierens des Torsionswinkels (α) durch Dividieren des Werts des Winkels (α) durch den Längsabstand (D), der die zwei Querstangen (2, 2a, 2b), die fest mit dem Karosserieboden des Fahrzeugs (V) verbunden sind, trennt.

9. Messverfahren nach Anspruch 8, **dadurch gekennzeichnet, dass** der Schritt des Eintretens in Torsion des Aufbaus des Fahrzeugs (V) über Plattformen verwirklicht wird, die auf Zylindern montiert sind, auf welchen die Räder (R) des Fahrzeugs (V) ruhen, und die vertikale Ausschläge auferlegen, die zu den Rädern (R) des Fahrzeugs (V) diagonal entgegengesetzt sind.

## Claims

1. A system (1) for measuring the twist angle (α) of the body of a vehicle (V), in particular a motor vehicle, including at two rigid rectilinear bars (2, 2a, 2b) detachably connected to the bottom of the body of the vehicle (V), transversely to the longitudinal direction of the vehicle and spaced apart from one another, and a measuring device (10, 11, 12, 13) connected to the end of at least one of the two transverse bars (2, 2a, 2b) and able to measure the twist angle (α) of the body from the relative vertical offset (H) between the two ends situated on the same side of the two transverse bars (2, 2a, 2b), **characterized in that** it includes a longitudinal bar (3) disposed parallel to the longitudinal axis of the vehicle and connected by one end rigidly to one of the two transverse bars (2a) and by the other end in a pivoting manner to the other transverse bar (2b) with respect to the axis of the longitudinal bar (3).

2. The measuring system (1) according to Claim 1, **characterized in that** the two transverse bars (2, 2a, 2b) are able to be secured to the respectively front and rear side members of the body of the vehicle (V).

3. The measuring system (1) according to Claim 1 or 2, **characterized in that** the longitudinal bar (3) is telescopic so as to regulate the distance of spacing between the two transverse bars (2a, 2b) connected to the ends of the longitudinal bar (3).

4. The measuring system (1) according to Claim 1, 2 or 3, **characterized in that** it includes an intermediate transverse bar (8) positioned close to the pivotably mounted transverse bar (2b) on the longitudinal bar (3), one end of the intermediate transverse bar (8) being connected to the longitudinal bar (3) such that the relative vertical offset (H) measured between the pivotably mounted transverse bar (2b) and the intermediate transverse bar (8) is the same as the relative vertical offset (H) between the two transverse bars (2a, 2b) connected to the bottom of the body of the vehicle (V).

5. The measuring system (1) according to Claim 4, **characterized in that** the measuring device includes a contact sensing device (10) connected to the end of the pivotably mounted transverse bar (2b) and the sensor (11) of which is in contact with the intermediate transverse bar (8) at the level of the end of the latter.

6. The measuring system (1) according to any one of Claims 1 to 3, **characterized in that** the measuring device includes at least one laser source (12) connected to the end of one of the two transverse bars (2) and a receiving cell (13) connected to the end of the other transverse bar (2) and able to receive a laser beam emitted by the laser source (12), and a processing unit of the output signal of the cell (13).

7. The measuring system (1) according to one of Claims 1 to 3, **characterized in that** it includes two measuring devices comprising respectively two laser sources (12) connected to the ends of the two transverse bars (2) and two receiving cells (13) connected to the ends of the two transverse bars (2) and able to receive respectively the two laser beams emitted by the two laser sources (12) and a processing unit of the output signals of the receiving cells (13).

8. A method for measuring the twist angle (α) of the body of a vehicle (V), in particular a motor vehicle, by means of a measuring system (1) according to any one of Claims 1 to 7, **characterized in that** it includes:
• A step of twisting of the body of the vehicle (V),
• A step of measuring the relative vertical offset (H) between the two ends of the two transverse bars (2, 2a, 2b),
• A step of calculating the twist angle (α) of the body of the vehicle (V) according to the formula α = arctan(*L*/*H*), H being the measured value of the vertical offset and L being the value of the transverse distance separating each measuring device from the longitudinal axis of the vehicle,
• A step of normalisation of the twist angle (α), dividing the value of the angle (α) by the longitudinal distance (D) separating the two transverse bars (2, 2a, 2b) connected to the bottom of the body of the vehicle (V).

9. The measuring method according to Claim 8, **characterized in that** the step of twisting of the body of the vehicle (V) is accomplished via platforms mounted on jacks on which the wheels (R) of the vehicle (V) rest, and imposing vertical displacements diagonally opposed to the wheels (R) of the vehicle (V) .
